(19) Europäisches Patentamt / European Patent Office / Office européen des brevets

(11) **EP 2 806 101 B1**

(12) **FASCICULE DE BREVET EUROPEEN**

(45) Date de publication et mention
de la délivrance du brevet:
**24.08.2016 Bulletin 2016/34**

(51) Int Cl.:
***E21B 49/00*** *(2006.01)*

(21) Numéro de dépôt: **14305688.5**

(22) Date de dépôt: **12.05.2014**

(54) **Procédé d'exploitation d'un milieu fracturé à partir d'un modèle de réservoir calé pour des puits choisis au moyen d'un modèle de transmissivité équivalente**

Verfahren zur Ausbeutung eines Bruchmilieus mit Hilfe eines kohärenten Speichermodells für Schächte, die mit Hilfe eines entsprechenden Transmissivitätsmodells ausgewählt werden

Method for exploiting a fracture medium from a wedge reservoir model for wells selected using an equivalent transmissivity pattern

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.05.2013 FR 1354518**

(43) Date de publication de la demande:
**26.11.2014 Bulletin 2014/48**

(73) Titulaire: **IFP Énergies nouvelles**
**92852 Rueil-Malmaison Cedex (FR)**

(72) Inventeurs:
• **Lange, Arnaud**
**92500 Rueil-Malmaison (FR)**
• **Kada Kloucha, Chakib**
**92150 Suresnes (FR)**

(56) Documents cités:
• **ARNAUD G LANGE: "Assisted history matching for the characterization of fractured reservoirs", AAPG BULLETIN,, vol. 93, no. 11, 1 novembre 2009 (2009-11-01), pages 1609-1619, XP009175654,**
• **Y. Schildberg ET AL: "Integration of Geostatistics and Well Test to Validate a Priori Geological Models for the dynamic simulation", SPE International, 8 octobre 1997 (1997-10-08), pages 491-505, XP055098402, Extrait de l'Internet: URL:http://mmc2.igeofcu.unam.mx/cursos/gest/Articulos/Reservoir%20Caracterization/00 038752_Integration%20of%20Geostatistics%20 and%20Well%20Test%20to%20Validate%20a%2 0Pr iori%20Geological%20Models%20for%20the%2 0D ynamic%20Simulation_Case%20Study.pdf [extrait le 2014-01-24]**

EP 2 806 101 B1

**Description**

La présente invention concerne le domaine de l'exploitation de milieu souterrain, tel qu'un réservoir pétrolier.

Plus particulièrement, l'invention concerne une méthode de calage d'historique («*history matching*») d'un modèle géologique représentatif d'un réservoir souterrain, dans laquelle on ajuste la géométrie d'un réseau de failles afin de reproduire par la simulation les données observées.

L'étude d'un milieu souterrain, notamment champ pétrolier, nécessite la construction de modèles, dits « modèles géologiques » au sens large. Ces modèles bien connus et largement utilisés dans l'industrie pétrolière, permettent de déterminer de nombreux paramètres techniques relatifs à la recherche, l'étude ou l'exploitation d'un réservoir d'hydrocarbures par exemple. En effet, ce modèle géologique est représentatif de la structure du réservoir ainsi que de son comportement. On peut ainsi par exemple déterminer quelles sont les zones qui ont le plus de chances de contenir des hydrocarbures, les zones dans lesquelles il peut être intéressant/nécessaire de forer un puits d'injection pour améliorer la récupération des hydrocarbures, le type d'outils à utiliser, les propriétés des fluides utilisés et récupérés.... Ces interprétations de modèles géologiques en termes de « paramètres techniques d'exploitation » sont bien connues des spécialistes, même si de nouvelles méthodes sont régulièrement développées. Il est donc crucial, dans le domaine pétrolier, de construire un modèle aussi précis que possible. Pour ce faire, l'intégration de toutes les données disponibles est indispensable.

Un modèle géologique (ou un modèle de réservoir) constitue une maquette du sous-sol, représentative à la fois de sa structure et de son comportement. Généralement, ce type de maquette est représenté sur un ordinateur, et l'on parle alors de modèle numérique.

Les réservoirs d'hydrocarbures sont en général des milieux poreux très hétérogènes et fracturés. Pour obtenir la meilleure image possible du réservoir, il est donc nécessaire, en plus des données statiques et dynamiques, d'intégrer les failles, appelées également fractures.

Une faille (ou une fracture) est une surface engendrée par une rupture en cisaillement séparant la roche en créant un rejet entre deux blocs adjacents. On distingue trois types de failles (on parle de familles de fractures, c'est-à-dire d'ensembles de fractures de même origine géologique) dans un réservoir. Les failles sismiques sont de grands objets visibles sur les sondages sismiques. Ce sont des objets de taille importante (de plusieurs centaines de mètres à plusieurs kilomètres). Les failles sismiques peuvent être modélisées explicitement, c'est-à-dire de manière non stochastique. Les failles sub-sismiques (ou sous-sismiques) sont des objets dont la taille n'est pas suffisamment élevée pour qu'ils soient visibles sur les images sismiques. Il s'agit de fracturation à échelle très variable (de l'ordre du mètre au kilomètre), ce type de fractures peut être modélisé par des méthodes stochastiques. Les failles diffuses correspondent à une fracturation à petite échelle (de l'ordre du mètre), pouvant être modélisées par des méthodes stochastiques i.e. par un ensemble de paramètres de loi de distributions.

Le modèle géologique (ou modèle de réservoir) dit fracturé est une représentation du milieu souterrain, dans lequel la géométrie des failles est généralement représentée par des objets booléens. En deux dimensions, les failles sont représentées par des linéaments, en trois dimensions par des surfaces. A chaque objet sont associées des propriétés telles que la porosité, la perméabilité, l'ouverture effective, etc.

Les failles sismiques sont ajoutées de manière déterministe, telles qu'elles sont vues par la sismique. Les failles sub-sismiques et diffuses qui sont invisibles, sont ajoutées par des procédés de construction dits « probabilistes » du fait de la limitation de l'information disponible (nombre de puits restreint, ...). De ce fait, les modèles géologiques (ou modèles de réservoir) construits à partir de ces procédés probabilistes sont appelés « modèles stochastiques ».

Généralement, l'intégration des propriétés de fractures s'effectue en deux étapes : (1) une première phase d'intégration décrit les propriétés géométriques des fractures (densité, longueur...) ; (2) une deuxième phase d'intégration décrit les propriétés dynamiques des fractures (perméabilité...). Par exemple les demandes de brevet US 6.023.656, US 5.659.135, US 5.661.698, US 6.922.662, US 2002/0016702, US 5.798.768 et CA 2.348.804 décrivent des méthodes comprenant ces deux étapes.

La caractérisation des propriétés géométriques des fractures s'effectue via l'intégration des données sismiques (pour les failles sismiques) et des données de puits. Cependant cette intégration est difficile car les données sont souvent incomplètes ou peu précises, et de grandes incertitudes subsistent en général sur les estimations des propriétés géométriques des fractures. En particulier, la longueur des fractures en-deçà de l'échelle sismique est très difficile à estimer. Ce type de méthode est décrit dans le document : Lange A., "Assisted History-Matching for the Characterization of Fractured Reservoirs", AAPG Bulletin, vol. 93, no.11, pp.1609-1619 (nov. 2009*).*

L'intégration des données dynamiques telles que les tests de puits permettent de réduire les incertitudes sur l'estimation des propriétés géométriques des fractures et de caractériser les propriétés d'écoulement des fractures, tel que cela ressort des documents : Bruyelle, J. and Lange, A. 2009. Automated Characterization of Fracture Conductivities from Well Tests Inversion. SPE 121172*,* et Lange, A. and Bruyelle, J. 2011. A Multimode Inversion Methodology for the Characterization of Fractured Reservoirs from Well Test Data. SPE 143518*.* Cette intégration s'effectue par exemple via une simulation d'écoulement sur des modèles discrétisés de réseaux de fractures, et en cherchant à caler les courbes transitoires de tests de puits. Cependant, cette approche est très coûteuse en temps de calcul.

Une autre approche, beaucoup plus rapide, consiste à estimer les propriétés équivalentes d'écoulement des réseaux de fractures via des modèles physiques simplifiés, et à caler uniquement la transmissivité équivalente estimée à partir des données de tests de puits. Cette approche est décrite dans les documents suivants : Kada Kloucha C. and Lange A., "Genetic-based Characterization of Fractured Reservoirs from Interpreted Weil Tests", SPE 160936 (2012) et Lange A., "Assisted History-Matching for the Characterization of Fractured Reservoirs", AAPG Bulletin, vol. 93, no.11, pp.1609-1619 (nov. 2009). Pour cette approche, le calage s'effectue au moyen de l'utilisation d'un algorithme d'optimisation cherchant à minimiser l'erreur entre la transmissivité équivalente observée et celle simulée.

Il subsiste cependant les difficultés suivantes :

- les incertitudes affectant les propriétés de fracture sont si grandes que l'espace de recherche devant être exploré par l'optimiseur est très vaste, réduisant les chances de caler les données observées de manière satisfaisante, et donc d'obtenir un modèle géologique fiable, et
- les données observées sont parfois incertaines (erreurs de mesures), mais cette incertitude est difficile à estimer. Cette situation est difficile à gérer par l'optimiseur, qui va toujours chercher à trouver des solutions de compromis, qui calent au mieux l'ensemble des données, qu'elles soient fiables ou pas, ces solutions de compromis sont souvent peu satisfaisantes.

Pour pallier ces problèmes, la présente invention concerne un procédé d'exploitation d'un milieu souterrain au moyen d'un modèle de réservoir fracturé. Le modèle de réservoir fracturé est calé pour un ensemble de puits choisis, pour lesquels les données dynamiques mesurées correspondent à des données dynamiques estimées au moyen d'un modèle de transmissivité équivalente. Le procédé selon l'invention permet une intégration efficace des données dynamiques pour caractériser des modèles géologiques de réservoir fracturé, en gérant les incertitudes affectant les propriétés de fractures et les erreurs de mesure des données dynamiques de puits.

**Le procédé selon l'invention**

L'invention concerne un procédé d'exploitation d'un milieu souterrain fracturé à partir d'un modèle de réservoir fracturé comportant un ensemble de mailles discrétisant ledit milieu souterrain, lesdites fractures étant caractérisées par au moins une propriété de fracture, pour laquelle on définit une plage de variation de ladite propriété, et ledit milieu souterrain étant traversé par au moins deux puits, procédé dans lequel on détermine au moins une transmissivité équivalente pour chaque puits. Pour ce procédé, on réalise les étapes suivantes :

a) on construit pour chaque puits un modèle de transmissivité équivalente, qui relie ladite transmissivité équivalente à ladite propriété de fracture ;
b) on estime pour chaque puits une gamme de transmissivité équivalente au moyen dudit modèle de transmissivité équivalente et de ladite plage de variation de ladite propriété de fracture ;
c) on choisit au moins un puits pour lequel ladite transmissivité équivalente déterminée est comprise dans ladite gamme de transmissivité équivalente ;
d) on génère un modèle de réservoir fracturé initial au moyen de ladite propriété de fracture et on cale ledit modèle de réservoir fracturé initial en faisant varier pour chaque puits choisi ladite propriété au sein de ladite plage de variation, de manière à minimiser une différence entre des données mesurées et des données simulées au moyen dudit modèle de réservoir fracturé et d'un simulateur d'écoulement ; et
e) on exploite ledit milieu souterrain selon un schéma d'exploitation défini à partir dudit modèle de réservoir fracturé calé.

Selon l'invention, après l'étape de choix de puits, on modifie ladite plage de variation de ladite propriété en fonction d'une comparaison entre ladite gamme de transmissivité équivalente et ladite transmissivité équivalente déterminée, l'étape de calage dudit modèle de réservoir fracturé étant réalisée en faisant varier ladite propriété dans ladite plage de variation modifiée.

Avantageusement, on détermine ladite transmissivité équivalente pour chaque puits au moyen de données de tests de puits.

De manière avantageuse, ladite au moins une propriété de fracture est choisie parmi la densité moyenne de fracture, la conductivité moyenne de fracture, l'ouverture moyenne de fracture, la longueur et la hauteur moyennes de fracture et l'orientation moyenne de fracture.

De préférence, ladite au moins une propriété de fracture varie pour chaque maille dudit modèle de réservoir fracturé, pour chaque faciès, ou pour chaque zone dudit milieu souterrain.

Selon l'invention, ledit modèle de transmissivité équivalente est un modèle analytique.

Selon un mode de réalisation de l'invention, ledit modèle analytique de transmissivité équivalente s'écrit par une formule de la forme : $KH^S = C_0[1 + \alpha_1 \cdot \theta_{d,1}]^{\omega(1,1)} \cdot [1 + \beta_1 \cdot \theta_{c,1}]^{\omega(1,2)}...[1 + \alpha_S \cdot \theta_{d,S}]^{\omega(S,1)} \cdot [1 + \beta_S \cdot \theta_{c,S}]^{\omega(S,2)}$ avec $S$ le nombre de familles de fractures considérées, $\theta_{d,j}$ et $\theta_{c,j}$ des propriétés normalisées associées respectivement à la densité et conductivité de la famille de fracture $j$, $\alpha_j$ et $\omega(j,1)$ sont des coefficients de pondération représentatifs de la contribution de la densité de la famille de fracture $j$ à l'estimation de la transmissivité équivalente $KH$, similairement, $\beta_j$ et $\omega(j,2)$ sont des coefficients de pondération représentatifs de la contribution de la conductivité de la famille de fracture $j$ à l'estimation de KH, et $C_0$ est un coefficient correctif, indépendant des propriétés de fracture.

Avantageusement, on génère le modèle de réservoir fracturé initial au moyen d'une propriété déterminée au moyen dudit modèle.

De manière préférentielle, on définit ladite plage de variation de ladite propriété au moyen de mesures et d'incertitudes concernant ces mesures.

De manière avantageuse, on cale ledit modèle de réservoir en minimisant une différence entre des données dynamiques mesurées et des données dynamiques simulées, notamment entre des transmissivités équivalentes mesurées et des transmissivités équivalentes simulées.

L'invention concerne en outre un produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'invention, lorsque ledit programme est exécuté sur un ordinateur.

**Présentation succincte des figures**

D'autres caractéristiques et avantages du procédé selon l'invention, apparaîtront à la lecture de la description ci-après d'exemples non limitatifs de réalisations, en se référant aux figures annexées et décrites ci-après.

La figure 1 illustre les différentes étapes du procédé selon l'invention.

La figure 2 illustre la transmissivité équivalente estimée pour quatre puits ainsi qu'une solution selon une méthode de l'art antérieur.

La figure 3 illustre un calage pour l'exemple de la figure 2 selon le procédé selon l'invention.

La figure 4 illustre, pour un exemple, une erreur entre la transmissivité équivalente estimée et la transmissivité équivalente mesurée pour une méthode selon l'art antérieur.

La figure 5 correspond à la figure 4 pour le procédé selon l'invention.

La figure 6a illustre, pour un exemple, une erreur entre la transmissivité équivalente estimée et la transmissivité équivalente mesurée pour une méthode de calage selon l'art antérieur.

La figure 6b illustre pour l'exemple de la figure 6a, la variation de l'erreur lors des itérations du calage pour une méthode selon l'art antérieur.

Les figures 7a et 7b correspondent aux figures 6a et 6b pour le procédé selon l'invention.

**Description détaillée de l'invention**

L'invention concerne un procédé d'exploitation d'un milieu souterrain, notamment un réservoir d'hydrocarbures. Par "hydrocarbures", on entend au sens de la présente invention des produits pétrolifères tels que du pétrole ou de l'huile brute, du pétrole ou de l'huile extra-lourde, des sables asphalténiques, des schistes bitumineux et des gaz présents dans une formation souterraine. Le procédé selon l'invention est également adapté à l'exploitation des réservoirs de stockage de gaz, tels que le $CO_2$.

Le milieu souterrain est fracturé (ou faillé) et est traversé par au moins un puits pour son exploitation, il peut s'agir de puits injecteurs et/ou de puits producteurs.

Le procédé d'exploitation selon l'invention est basé sur l'utilisation d'un modèle de réservoir fracturé fiable, calé grâce à une intégration de données dynamiques, notamment la transmissivité équivalente, notée KH.

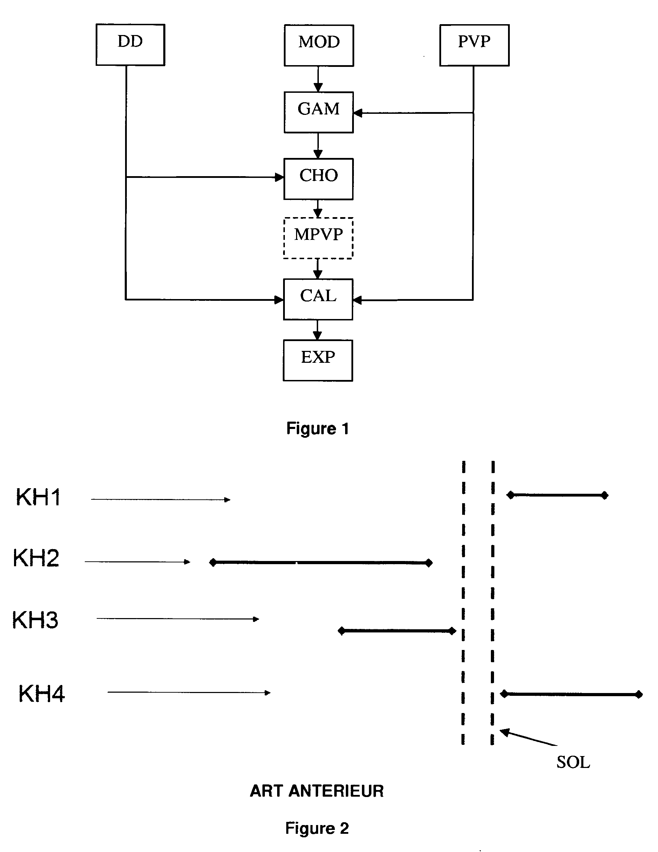

La figure 1 représente les étapes du procédé selon l'invention :

1) construction d'un modèle de transmissivité équivalente (MOD)
2) estimation d'une gamme de transmissivité équivalente (GAM)
3) choix de puits pour le calage (CHO)
4) modification de la plage de variation des propriétés de fractures (MPVP)
5) calage du modèle de réservoir fracturé (CAL)
6) exploitation du milieu souterrain (EXP)

L'étape 4) de modification de la plage de variation des propriétés de fractures (MPVP) est une étape facultative permettant de diminuer le temps de calcul lors du calage (CAL).

Le procédé selon l'invention permet une intégration de données dynamiques (DD) pour le modèle de réservoir fracturé. Ces données dynamiques (DD) sont notamment la transmissivité équivalente KH. La transmissivité équivalente désigne le produit K•H, où K désigne la perméabilité équivalente du milieu poreux fracturé et H la hauteur de réservoir équivalente sur laquelle la perméabilité est estimée.

On détermine pour chaque puits traversant le milieu souterrain la transmissivité équivalente. Cette quantité peut être estimée à partir des données (mesurées) de tests de puits. On spécifie les puits et les données associées qui sont considérés pour l'intégration dynamique. Par exemple, pour chaque puits Pi on peut considérer la transmissivité équivalente (KH)i estimée à partir de tests de puits, où i varie de 1 à N, et N est le nombre de puits.

On rappelle qu'on distingue trois familles de fractures (c'est-à-dire un ensemble de fractures de même origine géologique) dans un réservoir : les fractures sismiques qui sont de grands objets visibles sur les sondages sismiques, les fractures sub-sismiques (ou sous-sismiques) qui sont des objets dont la taille n'est pas suffisamment élevée pour qu'ils soient visibles sur les images sismiques et les fractures diffuses correspondant à la fracturation à petite échelle.

De plus, les fractures sont caractérisées par au moins une propriété, dite propriété de fractures. Les propriétés de fractures peuvent dépendre de la famille de fractures. Ces propriétés de fracture sont, par exemple (liste non exhaustive) :

- la densité moyenne de fracture pour une famille donnée
- la conductivité moyenne de fracture pour une famille donnée
- l'ouverture moyenne de fracture pour une famille donnée
- la longueur et hauteur moyenne de fracture pour une famille donnée
- l'orientation moyenne de fracture pour une famille donnée.

A noter que ces propriétés peuvent varier par faciès, par cellule de la grille ou par zone, afin de permettre une caractérisation localisée. Alternativement, les propriétés de fractures peuvent être constantes sur l'ensemble du milieu.

On définit une plage de variation de chaque propriété de fracture (PVP), appelé également "espace de recherche", pour les propriétés de fracture incertaines devant être caractérisées par l'intégration de données dynamiques. Il s'agit en fait de définir, pour chaque propriété de fracture, un intervalle de valeurs dans lequel on cherche des solutions qui devront reproduire au mieux les données dynamiques. La plage de variation de chaque propriété peut être déterminée en fonction de mesures physiques sur le milieu souterrain, et en fonction des incertitudes concernant ces mesures. Ces plages de variation peuvent être déterminées par un spécialiste en fonction de ces connaissances.

<u>1) construction d'un modèle de transmissivité équivalente (MOD)</u>

On appelle modèle de transmissivité équivalente, un modèle qui permet d'estimer la transmissivité équivalente. Ce modèle relie la transmissivité équivalente aux propriétés de fractures et dépend des familles de fractures. Il peut être analytique.

Étant donné que les propriétés de la roche et/ou des fractures varient en général d'un puits à l'autre, la transmissivité équivalente, mesurée via un test de puits par exemple, varie également d'un puits à l'autre. On propose donc de construire un modèle approché (analytique, par ex.), pour chaque puits, permettant d'estimer la transmissivité équivalente à partir des propriétés de fractures.

Il a déjà été démontré qu'il était possible de construire des modèles approchés analytiques fiables afin d'estimer la transmissivité équivalente à partir de certaines propriétés de fracture. Selon un mode de réalisation de l'invention, pour lequel les propriétés de fractures considérées sont la densité et la conductivité de fractures, les modèles analytiques peuvent exploiter la formulation générale suivante :

$$KH^S = C_0 \left[1 + \alpha_1 \cdot \theta_{d,1}\right]^{\omega(1,1)} \cdot \left[1 + \beta_1 \cdot \theta_{c,1}\right]^{\omega(1,2)} \ldots \left[1 + \alpha_S \cdot \theta_{d,S}\right]^{\omega(S,1)} \cdot \left[1 + \beta_S \cdot \theta_{c,S}\right]^{\omega(S,2)}$$

où S est le nombre de familles de fractures considérées, $\theta_{d,j}$ et $\theta_{c,j}$ sont des propriétés normalisées associées à la densité et conductivité de la famille de fracture $j$, respectivement, $\alpha_j$ et $\omega(j,1)$ sont des coefficients de pondération représentatifs de la contribution de la densité de la famille de fracture $j$ à l'estimation de la transmissivité équivalente *KH*, similairement, $\beta_j$ et $\omega(j,2)$ sont des coefficients de pondération représentatifs de la contribution de la conductivité de la famille de fracture $j$ à l'estimation de KH, enfin $C_0$ est un coefficient correctif, indépendant des propriétés de fracture. Cette formulation est une généralisation de la moyenne géométrique usuelle.

Le document Lange, A. and Bruyelle, J. 2011. A Multimode Inversion Methodology for the Characterization of Fractured Reservoirs from Well Test Data. SPE 143518 décrit un tel modèle analytique de transmissivité équivalente.

Selon un deuxième mode de réalisation de l'invention, pour lequel les propriétés de fractures considérées sont la densité et la conductivité de fracture, un modèle analytique peut être déterminé par une formyle de la forme suivante :

$$KH=[A_1+A_2{}^*\theta_d][B_1+B_2{}^*\theta_c]$$

où le paramètre $\theta_d$ est une propriété associée à la densité des fractures qui varie dans l'intervalle [0,1], et qui fait varier les densités de chaque famille et faciès simultanément, via : d(i,j)=dmin(i,j)+ $\theta_d$ * (dmax(i,j)-dmin(i,j)), pour le set i et faciès j, par exemple. De manière similaire la propriété $\theta_c$ associée à la conductivité de fractures fait varier les conductivités de chaque famille de fracture. On construit le modèle de transmissivité équivalente à partir de 4 simulations quelconques, afin de déterminer les coefficients $A_1$, $A_2$, $B_1$, $B_2$.

Ces modèles permettent donc d'estimer, pour des paramètres de densité et conductivité de fracture donnés, la transmissivité équivalente KH correspondante. Il ne s'agit que d'une approximation, et non d'une formule exacte.

2) estimation d'une gamme de transmissivité équivalente (GAM)

Les modèles de transmissivité équivalente sont utilisés pour estimer si une solution existe sur "l'espace de recherche" (la plage de variation des paramètres de fractures (PVP)) considéré : pour cela, on estime les valeurs extrêmes de la transmissivité équivalente *KH* sur l'espace de recherche au moyen du modèle. A partir de ces valeurs extrêmes, on détermine pour chaque puits une gamme de transmissivité équivalente. Cette gamme englobe toutes les valeurs que peut prendre la transmissivité équivalente estimée au moyen du modèle pour toute la plage de variation des propriétés.

3) choix de puits (CHO)

Lors de cette étape, on choisit les puits pour lesquels le calage d'historique va être mis en oeuvre. Pour chaque puits, on vérifie si la transmissivité équivalente *KH* déterminée (mesurée) est comprise dans la gamme de transmissivité équivalente estimée sur la plage de variation des propriétés de fractures. Il y a alors deux alternatives:

- pour chaque puits, la transmissivité équivalente *KH* mesurée est comprise dans la gamme de transmissivité équivalente estimée sur l'espace de recherche. Dans ce cas, au moins une solution existe permettant de caler toutes les transmissivités équivalentes *KH* pour tous les puits, alors on choisit tous les puits pour le réaliser le calage.
- il y a au moins un puits pour lequel la transmissivité équivalente *KH* mesurée n'est pas comprise dans la gamme de transmissivité équivalente estimée sur l'espace de recherche. Dans ce cas, soit l'espace de recherche n'est pas assez grand, et on peut le modifier de manière à borner toutes les transmissivités équivalentes *KH* mesurées pour tous les puits, soit la transmissivité équivalente *KH* mesurée n'est pas fiable (par exemple : erreur de mesure) et une tolérance peut être considérée pour le calage.

Les modèles de transmissivité équivalente sont ensuite utilisés pour estimer une ou plusieurs solutions sur l'espace de recherche, qui peuvent servir comme estimations initiales pour l'algorithme d'optimisation servant au calage. Il y a néanmoins deux alternatives :

- il n'existe pas de solution permettant de caler toutes les transmissivités équivalentes KH pour tous les puits. Dans ce cas, on choisit la solution permettant de caler un maximum de données de transmissivité équivalente KH, et on néglige donc la minorité de puits qui n'ont pas de transmissivité équivalente KH compatible avec la solution.
- il existe une solution commune permettant de caler toutes les transmissivités équivalentes KH pour tous les puits, elle est utilisée comme estimation initiale à l'algorithme d'optimisation servant au calage.

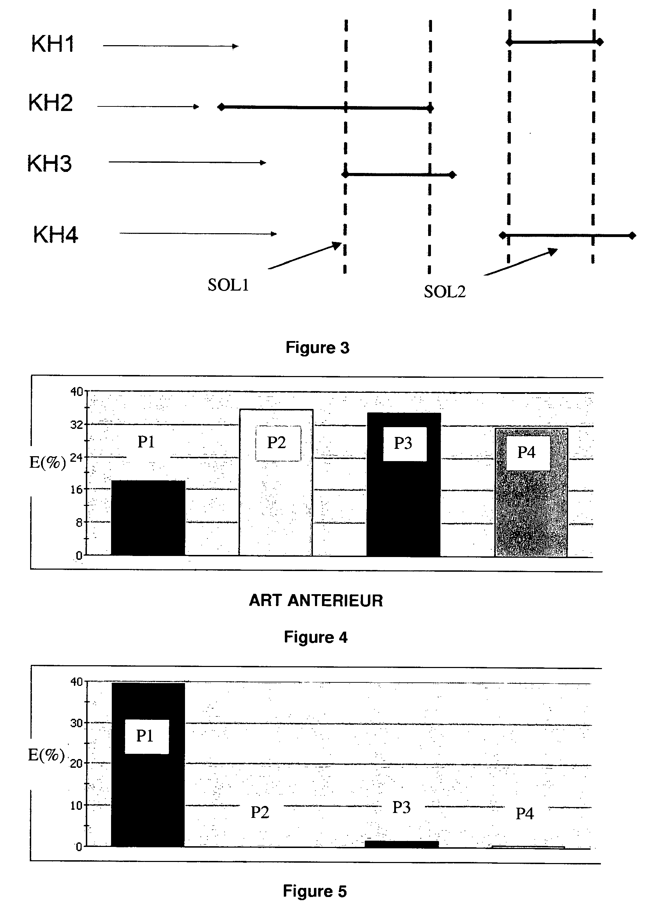

Les figures 2 et 3 illustrent des gammes de transmissivité équivalente estimées pour un exemple avec quatre puits respectivement pour une méthode selon l'art antérieur et pour le procédé selon l'invention. Sur ces figures, les segments horizontaux en gras indiquent les gammes de transmissivité équivalente estimées au moyen d'un modèle pour les quatre puits KH1, KH2, KH3 et KH4 et les pointillés verticaux limitent une solution (SOL) déterminée pour le calage des puits. Pour cet exemple, il n'existe pas de solution permettant de caler toutes les transmissivités équivalentes pour tous les puits. Pour l'art antérieur (figure 2), la solution de compromis, disposée entre les plages de variation des KH des quatre puits, n'est pas fiable, elle ne correspond à aucune des gammes de transmissivité équivalente estimées. Selon l'invention (figure 3), le procédé choisit un ensemble de puits pour lequel il existe une solution permettant de caler tous les puits de cet ensemble. Pour cet exemple, on peut choisir selon la solution 1 (SOL 1) les puits 2 et 3 ou selon la solution 2 (SOL 2) les puits 1 et 4.

Les figures 4 et 5 illustrent l'erreur E(%) en fonction des puits (P1 à P4) pour un autre exemple d'application où il n'existe pas de solution commune permettant de caler toutes les transmissivités équivalentes respectivement pour une méthode selon l'art antérieur et pour le procédé selon l'invention. Pour l'art antérieur (figure 4), la solution de compromis n'est pas fiable, l'erreur du calage reste important (entre 16 et 36 %) pour tous les puits. Selon l'invention (figure 5), le procédé choisit les puits P2, P3 et P4 pour le calage, le calage est très fiable pour ces puits (erreur inférieure à 2%) et important pour P1 (environ 40%).

L'étape de choix de puits permet donc d'améliorer la fiabilité du procédé, en particulier pour les cas, où aucune solution commune ne peut être déterminée.

4) modification de la Plage de variation des propriétés de fractures (MPVP)

Cette étape facultative permet de diminuer le temps de calcul lors du calage en limitant l'étendue des plages de variation des propriétés de fractures. Pour cela, on actualise l'espace de recherche (les plages de variation des propriétés de fractures) en le réduisant aux intervalles contenant des solutions estimées via le modèle de transmissivité équivalente.

Les données de puits peuvent être également réduites à celles qui permettent de définir une solution satisfaisante pour un maximum de puits et/ou pour une sélection de puits particulière.

Par exemple, si on se base sur la solution 1 de la figure 3, on peut limiter les gammes de transmissivité équivalentes KH2 et KH3 aux limites de la solution 1. Puis, on en déduit au moyen du modèle, les plages de variation des propriétés de fractures qui aboutissent à ces gammes.

Ainsi, lors du calage du modèle de réservoir fracturé, on modifie les propriétés de fracture dans une plage de variation réduite, ce qui réduit le nombre de possibilités de chaque propriété de fractures, donc le nombre d'itérations utiles pour le calage, par conséquent le temps de calcul est également réduit.

5) calage du modèle de réservoir fracturé (CAL)

Lors de cette étape, on génère un modèle de réservoir fracturé initial, par exemple de manière géostatistique à partir de données statiques, de données sismiques, des propriétés des fractures et leurs plages de variation (modifiées ou non) pour les puits choisis. Avantageusement, on génère le modèle de réservoir fracturé initial au moyen d'une propriété déterminée au moyen dudit modèle.

Puis, on cale le modèle de réservoir fracturé au moyen d'un algorithme d'optimisation en faisant varier les propriétés dans leurs plages de variation (modifiées ou non), de manière à minimiser une différence entre des données dynamiques mesurées et des données dynamiques simulées au moyen du modèle de réservoir fracturé et d'un simulateur d'écoulement. Selon un mode de réalisation de l'invention, les données dynamiques considérées sont les KH.

Une simulation de réservoir est une technique permettant de simuler les écoulements de fluides au sein d'un réservoir au moyen d'un logiciel appelé simulateur d'écoulement, et du modèle de réservoir. Par exemple, le logiciel PumaFlow ® (IFP Énergies nouvelles, France) est un simulateur d'écoulement.

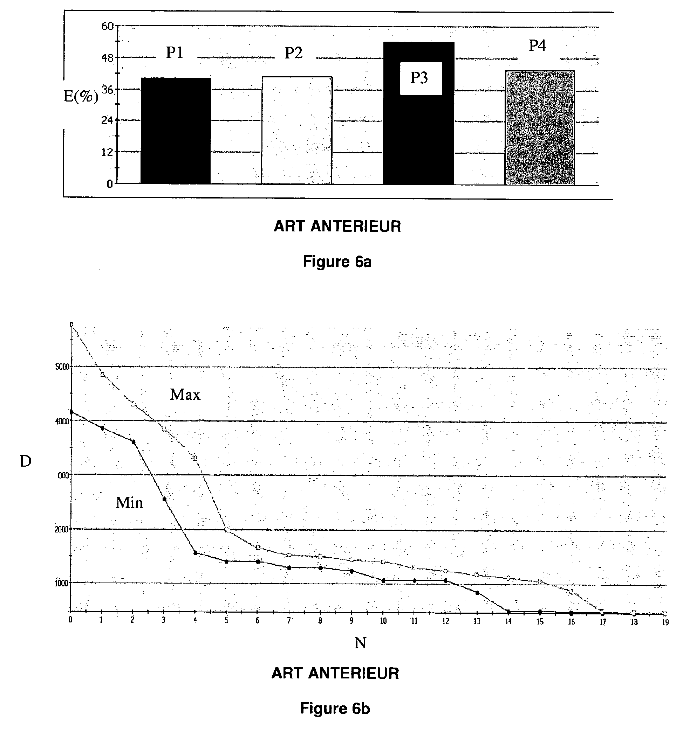

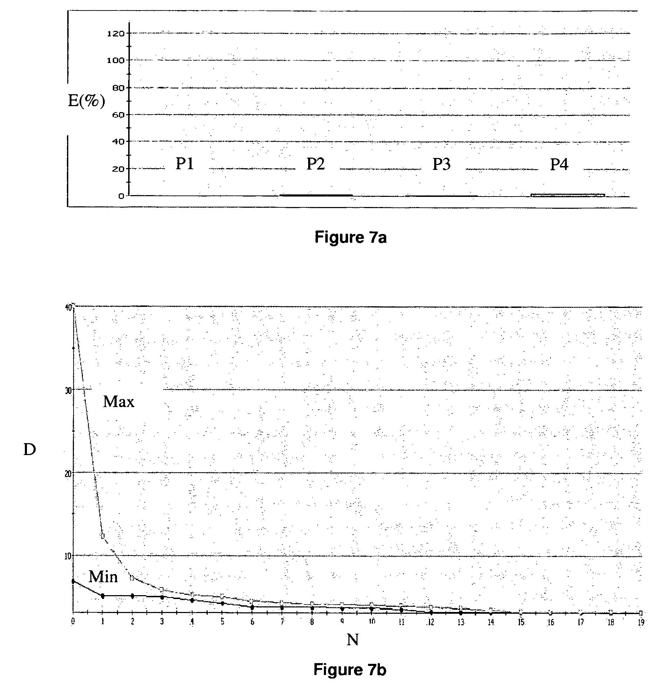

Les figures 6 et 7 représentent les résultats d'un calage pour un exemple d'application où les plages de variation des propriétés de fractures sont vastes respectivement pour une méthode de calage selon l'art antérieur et pour un procédé selon l'invention.

Les figures 6a et 7a illustrent l'erreur E (%) en fonction des puits (P1 à P4). Pour l'art antérieur (figure 6a), la solution de compromis n'est pas fiable, l'erreur du calage reste importante (entre 40 et 54 %) pour chaque puits. Selon l'invention (figure 7a), le procédé choisit une solution satisfaisante au moyen de l'utilisation du modèle. A la fin du processus de calage, l'erreur est faible pour les quatre puits.

Les figures 6b et 7b représentent la différence D entre des données dynamiques mesurées et des données dynamiques simulées en fonction du nombre N d'itérations de la méthode de calage. Pour l'art antérieur (figure 6b), les différences minimale (Min) et maximale (Max) restent très élevées ; une douzaine d'itérations sont nécessaires pour obtenir une différence D inférieure à 1000. Alors que selon l'invention (figure 7b), la différence vaut dès la première itération 40.

Par conséquent, le procédé selon l'invention permet de déterminer un modèle de réservoir fracturé plus fiable en réduisant le temps de calcul.

6) exploitation du milieu souterrain (EXP)

A partir du modèle de réservoir fracturé déterminé et calé lors des étapes précédentes, les spécialistes peuvent déterminer plusieurs schémas d'exploitation correspondant à différentes configurations possibles d'exploitation du réservoir souterrain : emplacement des puits producteurs et/ou injecteurs, valeurs cibles pour les débits par puits et/ou pour le réservoir, le type d'outils utilisés, les fluides utilisés, injectés et/ou récupérés... Pour chacun de ces schémas, il convient de déterminer leurs prévisions de production après la période de calage. Ces prévisions de production probabilistes sont obtenues au moyen d'un logiciel de simulation d'écoulement (de préférence le même que celui utilisé auparavant) ainsi qu'au moyen du modèle numérique de réservoir fracturé calé.

On définit un ou plusieurs schémas d'exploitation possibles adapté au modèle de réservoir fracturé (appelé également modèle géologique). Pour chacun de ces schémas, on détermine les réponses par simulation.

A partir des prévisions de productions probabilistes définies pour chaque schéma d'exploitation, les spécialistes peuvent par comparaison choisir le schéma d'exploitation qui leur semble le plus pertinent. Par exemple :

- en comparant le maximum du volume d'huile récupéré, on peut déterminer le schéma de production susceptible de fournir le maximum de récupération ou d'être le plus rentable.

- en comparant l'écart type du volume d'huile récupéré, on peut déterminer le schéma de production le moins risqué.

On exploite alors le réservoir selon le schéma d'exploitation défini par exemple en forant de nouveaux puits (producteur ou injecteur), en modifiant les outils utilisés, en modifiant les débits et/ou la nature de fluides injectés...

Le procédé selon l'invention trouve son application dans le domaine de récupération des hydrocarbures, et dans le domaine du stockage du $CO_2$.

L'invention concerne par ailleurs un produit programme d'ordinateur téléchargeable depuis un réseau de communication et/ou enregistré sur un support lisible par ordinateur et/ou exécutable par un processeur. Ce programme comprend des instructions de code de programme pour la mise en oeuvre du procédé tel que décrit ci-dessus, lorsque ledit programme est exécuté sur un ordinateur.

## Revendications

1. Procédé d'exploitation d'un milieu souterrain fracturé à partir d'un modèle de réservoir fracturé comportant un ensemble de mailles discrétisant ledit milieu souterrain, lesdites fractures étant **caractérisées par** au moins une propriété de fracture, pour laquelle on définit une plage de variation de ladite propriété, et ledit milieu souterrain étant traversé par au moins deux puits, procédé dans lequel on détermine au moins une transmissivité équivalente pour chaque puits, **caractérisé en ce qu'**on réalise les étapes suivantes :

   a) on construit pour chaque puits un modèle de transmissivité équivalente, qui relie ladite transmissivité équivalente à ladite propriété de fracture ;
   b) on estime pour chaque puits une gamme de transmissivité équivalente au moyen dudit modèle de transmissivité équivalente et de ladite plage de variation de ladite propriété de fracture ;
   c) on choisit au moins un puits pour lequel ladite transmissivité équivalente déterminée est comprise dans ladite gamme de transmissivité équivalente ;
   d) on génère un modèle de réservoir fracturé initial au moyen de ladite propriété de fracture et on cale ledit modèle de réservoir fracturé initial en faisant varier pour chaque puits choisi ladite propriété au sein de ladite plage de variation, de manière à minimiser une différence entre des données mesurées et des données simulées au moyen dudit modèle de réservoir fracturé et d'un simulateur d'écoulement ; et
   e) on exploite ledit milieu souterrain selon un schéma d'exploitation défini à partir dudit modèle de réservoir fracturé calé.

2. Procédé selon la revendication 1, dans lequel après l'étape de choix de puits, on modifie ladite plage de variation de ladite propriété en fonction d'une comparaison entre ladite gamme de transmissivité équivalente et ladite transmissivité équivalente déterminée, l'étape de calage dudit modèle de réservoir fracturé étant réalisée en faisant varier ladite propriété dans ladite plage de variation modifiée.

3. Procédé selon l'une des revendications précédentes, dans lequel on détermine ladite transmissivité équivalente pour chaque puits au moyen de données de tests de puits.

4. Procédé selon l'une des revendications précédentes, dans lequel ladite au moins une propriété de fracture est choisie parmi la densité moyenne de fracture, la conductivité moyenne de fracture, l'ouverture moyenne de fracture, la longueur et la hauteur moyennes de fracture et l'orientation moyenne de fracture.

5. Procédé selon l'une des revendications précédentes, dans lequel ladite au moins une propriété de fracture varie pour chaque maille dudit modèle de réservoir fracturé, pour chaque faciès, ou pour chaque zone dudit milieu souterrain.

6.  Procédé selon l'une des revendications précédentes, dans lequel ledit modèle de transmissivité équivalente est un modèle analytique.

7.  Procédé selon la revendication 6, dans lequel ledit modèle analytique de transmissivité équivalente s'écrit par une formule de la forme : $KH^S = C_0[1 + \alpha_1 \cdot \theta_{d,1}]^{\omega(1,1)} \cdot [1 + \beta_1 \cdot \theta_{c,1}]^{\omega(1,2)} ... [1 + \alpha_S \cdot \theta_{d,S}]^{\omega(S,1)} \cdot [1 + \beta_S \cdot \theta_{c,S}]^{\omega(S,2)}$ avec $S$ le nombre de familles de fractures considérées, $\theta_{d,j}$ et $\theta_{c,j}$ des propriétés normalisées associées respectivement à la densité et conductivité de la famille de fracture $j$, $\alpha_j$ et $\omega(j,1)$ sont des coefficients de pondération représentatifs de la contribution de la densité de la famille de fracture $j$ à l'estimation de la transmissivité équivalente $KH$, similairement, $\beta_j$ et $\omega(j,2)$ sont des coefficients de pondération représentatifs de la contribution de la conductivité de la famille de fracture $j$ à l'estimation de KH, et $C_0$ est un coefficient correctif, indépendant des propriétés de fracture.

8.  Procédé selon l'une des revendications précédentes, dans lequel on génère le modèle de réservoir fracturé initial au moyen d'une propriété déterminée au moyen dudit modèle.

9.  Procédé selon l'une des revendications précédentes, dans lequel on définit ladite plage de variation de ladite propriété au moyen de mesures et d'incertitudes concernant ces mesures.

10. Procédé selon l'une des revendications précédentes, dans lequel on cale ledit modèle de réservoir en minimisant une différence entre des données dynamiques mesurées et des données dynamiques simulées, notamment entre des transmissivités équivalentes mesurées et des transmissivités équivalentes simulées.

11. Produit programme d'ordinateur téléchargeable depuis un réseau de communication et/ou enregistré sur un support lisible par ordinateur et/ou exécutable par un processeur, comprenant des instructions de code de programme pour la mise en oeuvre du procédé selon l'une des revendications précédentes, lorsque ledit programme est exécuté sur un ordinateur.

**Patentansprüche**

1.  Verfahren zur Nutzung eines gebrochenen unterirdischen Milieus ausgehend von einem Modell des gebrochenen Reservoirs, das eine Einheit von Maschen umfasst, die das unterirdische Milieu diskretisiert, wobei die Brüche durch mindestens eine Brucheigenschaft gekennzeichnet sind, für die ein Variationsbereich der Eigenschaft definiert wird, und wobei das unterirdische Milieu von mindestens zwei Schächten durchquert ist, Verfahren, bei dem mindestens eine äquivalente Durchlässigkeit für jeden Schacht bestimmt wird, **dadurch gekennzeichnet, dass** die folgenden Schritte ausgeführt werden:

    a) für jeden Schacht Bauen eines Modells äquivalenter Durchlässigkeit, das die äquivalente Durchlässigkeit mit der Brucheigenschaft verbindet,
    b) Schätzen für jeden Schacht eines Bereichs äquivalenter Durchlässigkeit mittels des Modells äquivalenter Durchlässigkeit und des Variationsbereichs der Brucheigenschaft,
    c) Auswählen mindestens eines Schachts für den die bestimmte äquivalente Durchlässigkeit in dem Bereich äquivalenter Durchlässigkeit enthalten ist,
    d) Erzeugen eines Modells eines ursprünglichen gebrochenen Reservoirs mittels der Brucheigenschaft und Abstimmen des Modells des anfänglichen gebrochenen Reservoirs, indem für jeden ausgewählten Schacht die Eigenschaft innerhalb des Variationsbereichs derart variiert wird, dass ein Unterschied zwischen gemessenen Daten und Daten, die mittels des gebrochenen Reservoirmodells und mittels eines Abflusssimulators gemessen und simuliert werden, minimiert wird, und
    e) man das unterirdische Milieu gemäß einem Nutzungsschema, das ausgehend von dem Modell des abgestimmten gebrochenen Reservoirs definiert ist, nutzt.

2.  Verfahren nach Anspruch 1, wobei nach dem Schachtauswahlschritt der Variationsbereich des Merkmals in Abhängigkeit von einem Vergleich zwischen dem äquivalenten Durchlässigkeitsbereich und dem bestimmten äquivalenten Durchlässigkeit geändert wird, wobei der Abstimmschritt des Modells des gebrochenen Reservoirs ausgeführt wird, indem das Merkmal in dem geänderten Variationsbereich variiert wird.

3. Verfahren nach einem der vorhergehenden Ansprüche, wobei die äquivalente Durchlässigkeit für jeden Schacht mittels Schachttestdaten bestimmt wird.

4. Verfahren nach einem der vorhergehenden Ansprüche, wobei die mindestens eine Brucheigenschaft aus der mittleren Bruchdichte, der mittleren Bruchleitfähigkeit, der mittleren Bruchöffnung, der mittleren Bruchlänge und Bruchhöhe sowie der mittleren Bruchausrichtung ausgewählt wird.

5. Verfahren nach einem der vorhergehenden Ansprüche, wobei die mindestens eine Brucheigenschaft für jede Masche des Modells des gebrochenen Reservoirs, für jedes Bruchmuster oder für jede Zone des unterirdischen Milieus variiert.

6. Verfahren nach einem der vorhergehenden Ansprüche, wobei das äquivalente Durchlässigkeitsmodell ein analytisches Modell ist.

7. Verfahren nach Anspruch 6, wobei das analytische Modell der äquivalenten Durchlässigkeit durch eine Formel mit der folgenden Form geschrieben wird:

$$KH^S = C_0 \left[1 + \alpha_1 \cdot \Theta_{d,1}\right]^{\varpi(1,1)} \cdot \left[1 + \beta_1 \cdot \Theta_{c,1}\right]^{\varpi(1,2)} ... \left[1 + \alpha_S \cdot \Theta_{d,S}\right]^{\varpi(S,1)} \cdot \left[1 + \beta_S \cdot \Theta_{c,S}\right]^{\varpi(S,2)}$$

wobei $S$ die Anzahl berücksichtigter Bruchfamilien ist, $\theta_{dj}$ und $\theta_{cj}$ normalisierte Eigenschaften sind, die jeweils mit der Dichte und der Leitfähigkeit der Bruchfamilie $j$, $\alpha_j$ verbunden sind, und $\omega(j,1)$ Gewichtungskoeffizienten sind, die für den Beitrag der Dichte der Bruchfamilie $j$ zur Schätzung der äquivalenten Durchlässigkeit $KH$ repräsentativ sind, auf ähnliche Art $\beta_j$ und $\omega(j,2)$ Gewichtungskoeffizienten sind, die für den Beitrag der Leitfähigkeit der Bruchfamilie $j$ zur Schätzung von $KH$ repräsentativ sind, und $C_0$ ein Korrekturfaktor ist, der von den Brucheigenschaften unabhängig ist.

8. Verfahren nach einem der vorhergehenden Ansprüche, wobei das das Modell des ursprünglichen gebrochenen Reservoirs mit Hilfe einer bestimmten Eigenschaft des Modells erzeugt wird.

9. Verfahren nach einem der vorhergehenden Ansprüche, wobei der Variationsbereich der Eigenschaft mittels Messungen und Unsicherheiten, die diese Messungen betreffen, definiert wird.

10. Verfahren nach einem der vorhergehenden Ansprüche, wobei das Reservoirmodell abgestimmt wird, indem ein Unterschied zwischen gemessenen dynamischen Daten und simulierten dynamischen Daten minimiert wird, insbesondere zwischen gemessenen äquivalenten Durchlässigkeiten und simulierten äquivalenten Durchlässigkeiten.

11. Computerprogrammprodukt, das von einem Kommunikationsnetz heruntergeladen wird und/oder auf einem computerlesbaren Medium aufgezeichnet und/oder durch einen Prozessor ausführbar ist, das Programmcodeanweisungen zum Umsetzen des Verfahrens nach einem der vorhergehenden Ansprüche umfasst, wobei das Programm auf einem Rechner ausgeführt wird.

**Claims**

1. A method for exploiting a fractured underground medium from a fractured reservoir model comprising a set of cells discretizing said underground medium, said fractures being **characterized by** at least one fracture property for which a variation range of said property is defined, said underground medium being traversed by at least two wells, wherein at least one equivalent transmissivity is determined for each well, **characterized in that** the following stages are carried out:

a) constructing for each well an equivalent transmissivity model connecting said equivalent transmissivity to said fracture property,
b) estimating for each well an equivalent transmissivity range by means of said equivalent transmissivity model and of said variation range of said fracture property,
c) selecting at least one well for which said determined equivalent transmissivity is contained within said equivalent transmissivity range,

d) generating an initial fractured reservoir model by means of said fracture property and calibrating said initial fractured reservoir model by varying for each selected well said property within said variation range, so as to minimize a difference between measured data and simulated data by means of said fractured reservoir model and of a flow simulator, and

e) exploiting said underground medium according to an exploitation scheme defined from said calibrated fractured reservoir model.

2. A method as claimed in claim 1 wherein, after the well selection stage, said variation range of said property is modified as a function of a comparison between said equivalent transmissivity range and said determined equivalent transmissivity, the stage of calibrating said fractured reservoir model being carried out by varying said property within said modified variation range.

3. A method as claimed in any one of the previous claims, wherein said equivalent transmissivity is determined for each well by means of well test data.

4. A method as claimed in any one of the previous claims, wherein said at least one fracture property is selected from among average fracture density, average fracture conductivity, average fracture opening, average fracture length and height, and average fracture orientation.

5. A method as claimed in any one of the previous claims, wherein said at least one fracture property varies for each cell of said fractured reservoir model, for each facies or for each zone of said underground medium.

6. A method as claimed in any one of the previous claims, wherein said equivalent transmissivity model is an analytical model.

7. A method as claimed in claim 6, wherein said analytical equivalent transmissivity model is written with a formula of the form:

$$ KH^S = C_0 \left[1 + \alpha_1 \cdot \theta_{d,1}\right]^{\omega(1,1)} \cdot \left[1 + \beta_1 \cdot \theta_{c,1}\right]^{\omega(1,2)} \ldots \left[1 + \alpha_S \cdot \theta_{d,S}\right]^{\omega(S,1)} \cdot \left[1 + \beta_S \cdot \theta_{c,S}\right]^{\omega(S,} $$

with S the number of fracture families considered, $\theta_{d,j}$ and $\theta_{c,j}$ normalized properties associated with the density and conductivity of fracture family $j$ respectively, $\alpha_j$ and $\omega(j,1)$ are weighting coefficients representative of the contribution of the density of fracture family $j$ to the estimation of equivalent transmissivity $KH$, similarly, $\beta_j$ and $\omega(j,2)$ are weighting coefficients representative of the contribution of the conductivity of fracture family $j$ to the estimation of KH, and $C_0$ is a corrective coefficient independent of the fracture properties.

8. A method as claimed in any one of the previous claims, wherein the initial fractured reservoir model is generated by means of a property determined using said model.

9. A method as claimed in any one of the previous claims, wherein said variation range of said property is defined by means of measurements and uncertainties concerning these measurements.

10. A method as claimed in any one of the previous claims, wherein said reservoir model is calibrated by minimizing a difference between measured dynamic data and simulated dynamic data, notably between measured equivalent transmissivities and simulated equivalent transmissivities.

11. A computer program product downloadable from a communication network and/or recorded on a computer-readable medium and/or processor executable, comprising program code instructions for implementing the method as claimed in any one of the previous claims, when said program is executed on a computer.

Figure 1

ART ANTERIEUR

Figure 2

KH1

KH2

KH3

KH4

SOL1

SOL2

**Figure 3**

E(%)

40

32

24

16

8

0

P1

P2

P3

P4

**ART ANTERIEUR**

**Figure 4**

E(%)

40

30

20

10

0

P1

P2

P3

P4

**Figure 5**

**ART ANTERIEUR**

**Figure 6a**

**ART ANTERIEUR**

**Figure 6b**

**Figure 7a**

**Figure 7b**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6023656 A
- US 5659135 A
- US 5661698 A
- US 6922662 B
- US 20020016702 A
- US 5798768 A
- CA 2348804

**Littérature non-brevet citée dans la description**

- **LANGE A.** Assisted History-Matching for the Characterization of Fractured Reservoirs. *AAPG Bulletin,* Novembre 2009, vol. 93 (11), 1609-1619
- **BRUYELLE, J. ; LANGE, A.** Automated Characterization of Fracture Conductivities from Well Tests Inversion. *SPE 121172,* 2009
- **LANGE, A. ; BRUYELLE, J.** A Multimode Inversion Methodology for the Characterization of Fractured Reservoirs from Well Test Data. *SPE 143518,* 2011
- **KADA KLOUCHA C. ; LANGE A.** Genetic-based Characterization of Fractured Reservoirs from Interpreted Weil Tests. *SPE 160936,* 2012